# EUROPEAN PATENT APPLICATION

(11) **EP 2 985 717 A1**
(43) Date of publication of application: **17.02.2016**
(21) Application number: 13881720.0
(22) Date of filing: 12.04.2013
(51) Int. Cl.: G06F 21/60, G06F 21/88

(54) **DATA ERASING DEVICE, DATA ERASING METHOD, PROGRAM, AND STORAGE MEDIUM**

(71) Applicant: Fujitsu Limited, Kawasaki-shi, Kanagawa 211-8588 (JP)
(72) Inventor: MUKOUCHI, Masaki, Kawasaki-shi Kanagawa 211-8588 (JP)
(74) Representative: Fenlon, Christine Lesley
(86) International application number: PCT/JP2013/061099
(87) International publication number: WO 2014/167721

(57) **Abstract**

A data erasing apparatus is characterized by including a storage part having a first storage region, and a second storage region that stores data to be erased in a case in which a predetermined erasing condition is satisfied, a modifying part that modifies authentication information when the predetermined erasing condition is satisfied, an erasing process executing part that executes a data erasing process to erase data stored in the second storage region in a case in which the authentication information has been modified, and a communication process part that transmits, via a network, a notification indicating a data erasure after the data erasing process is executed, wherein a program that causes the data erasing apparatus to function as the erasing process executing part and the communication process part is stored in the first storage region and does not operate in an OS stored in the second storage region.

## Description

### TECHNICAL FIELD

The present invention relates to a data erasing apparatus, a data erasing method, and a program.

### BACKGROUND ART

As countermeasures against information leak caused by theft or losing an information device, techniques have been proposed to remotely erase data stored in the information device after an accident occurs, for example (refer to Non-Patent Documents 1 and 2, for example). In addition, a storage device has been proposed to prevent data leak (refer to Patent Document 1, for example).

In a case in which the data is erased from a viewpoint of countermeasures against information leak, all of the data needs to be positively erased. Particularly in a situation where the data is remotely erased, it is not possible for a user to confirm whether the data is positively erased in the user's presence. For this reason, an execution result notified from the information device which erases the data is very important.

However, when the data in the entire storage device is erased in order to positively erase the data, applications operating on an OS within the storage device are also erased, to thereby make it impossible for the information device to transmit a notification on whether the data is erased after the data erasure. Hence, a proposal has been made to notify the execution result after the data erasure using dedicated hardware.

### PRIOR ART DOCUMENTS

### NON-PATENT DOCUMENTS

Non-Patent Document 1: TRUSTDELETE: TrustDelete is a software that can remotely delete sensitive data and personal information that is stored in a hard disk, OneBe, Inc., "http://www. onebe.co.jp/product/trustdelete_pc/index.html"
Non-Patent Document 2: CLEARSURE Press Release, "http://pr.fujitsu.com/jp/news/2009/08/24.html"

### PATENT DOCUMENTS

Patent Document 1: Japanese Laid-Open Patent Publication No. 2011-210129

### DISCLOSURE OF THE INVENTION

### PROBLEM TO BE SOLVED BY THE INVENTION

However, extending or modifying a function provided by the dedicated hardware is not as easy compared to a case in which the function is provided by software. In addition, providing the dedicated hardware in the information device increases the cost of the information device.

One object according to one aspect is to transmit the notification on whether the data is erased after the data erasure without using the dedicated hardware.

### MEANS OF SOLVING THE PROBLEM

According to one aspect, a data erasing apparatus is characterized in that there are provided:
a storage part having a first storage region, and a second storage region that stores data to be erased in a case in which a predetermined erasing condition is satisfied;
a modifying part that modifies authentication information when the predetermined erasing condition is satisfied;
an erasing process executing part that executes a data erasing process to erase data stored in the second storage region in a case in which the authentication information has been modified; and
a communication process part that transmits, via a network, a notification indicating a data erasure after the data erasing process is executed,
wherein a program that causes the data erasing apparatus to function as the erasing process executing part and the communication process part is stored in the first storage region and does not operate in an OS stored in the second storage region.

### EFFECTS OF THE INVENTION

According one embodiment, it is possible to transmit the notification on whether the data is erased after the data erasure without using the dedicated hardware.

### BRIEF DESCRIPTION OF THE DRAWING

FIG. 1 is a diagram illustrating an example of a data erasing apparatus;
FIG. 2 is a diagram illustrating a configuration of the data erasing apparatus in one embodiment;
FIG. 3 is a diagram for explaining an operation of the data erasing apparatus in one embodiment;
FIG. 4 is a diagram illustrating an operation sequence of parts of the data erasing apparatus in one embodiment;
FIG. 5 is a diagram for explaining an operation of the data erasing apparatus in an exemplary implementation 1;
FIG. 6 is a diagram illustrating an operation sequence of parts of the data erasing apparatus in the exemplary implementation 1;
FIG. 7 is a flow chart illustrating an operation of an execution judging part of the data erasing apparatus in the exemplary implementation 1;
FIG. 8 is a flow chart illustrating operations of an erasing process executing part and a communication process part of the data erasing apparatus in the exemplary implementation 1;
FIG. 9 is a diagram for explaining an operation of the data erasing apparatus in an exemplary implementation 2;
FIG. 10 is a diagram for explaining a configuration of the data erasing apparatus in a modification of one embodiment; and
FIG. 11 is a flow chart illustrating an operation of the erasing process executing part and the communication process part of the data erasing apparatus in the modification of one embodiment.

### MODE OF CARRYING OUT THE INVENTION

A detailed description will be given of embodiments of the present invention, by referring to the drawings. In this specification and drawings, constituent elements having substantially the same function or configuration are designated by the same reference numerals, and a description thereof will not be repeated.

As countermeasures against information leak caused by theft or losing an information device, techniques have been proposed to remotely erase data stored in the information device after an accident occurs, for example. From a viewpoint of countermeasures against information leak, when erasing the data in a PC system, all of the data needs to be positively erased. For this reason, a notification transmitted from the information device that erases the data, after the data erasure, and indicating that the data is positively erased, is very important.

In a mobile phone and a smartphone in which wireless communication is a precondition, a user data storage region and a system region are distinguished from each other. For this reason, even after erasure of a specific data storage region is executed, it is possible to operate a communication function in a normal manner and notify the execution result to the outside.

On the other hand, in the PC system, when the data in the entire storage is erased in order to positively erase the data, applications operating on an OS within the storage are also erased. When the applications operating on the OS are erased, it no longer becomes possible to notify the data erasure. Hence, a method has been proposed to make a notification to the outside, by a communication application, to notify a start of executing the data erasure immediately before the data in the entire storage is erased, and executing a data erasing process immediately after making the notification. However, the notification that is made in this case is "a notification indicating the start of the data erasure" and not "a notification indicating the data erasure".

For example, it takes time to erase the data in the entire storage. For this reason, in a case in which a thief notices that the data erasing process is in progress and immediately shuts down the power or the like, the data erasing process is interrupted. In a case in which the storage in this state is connected to another PC system, there is a possibility that the information within the storage will be readable. Accordingly, it is not possible to know from "a notification indicating the start of the data erasure" that the data is actually erased completely.

It is possible to notify the execution result to the outside after executing the data erasure, if the communication application on the OS is not erased. In order not to erase the communication application, the communication application needs to remain in a system folder, and targets of the data erasure need to be limited to specific folders or files. However, the user of the PC system does not necessarily store the information in the specific folders that are the targets of the data erasure, and depending on the application operating on the OS, a temporary file may in some cases be created automatically in a folder other than the target of the data erasure. Accordingly, even when the data erasure is made by setting the specific folder or file as the target of the data erasure, and the notification on the data erasure is transmitted, the temporary file that is automatically created may remain in the storage region, and the notification on the execution result of the data erasure may be unreliable. In other words, the execution result of the data erasure is merely the execution result for an erasing target range that is specified, and it is impossible to perfectly verify that no information to be erased remains in other folders.

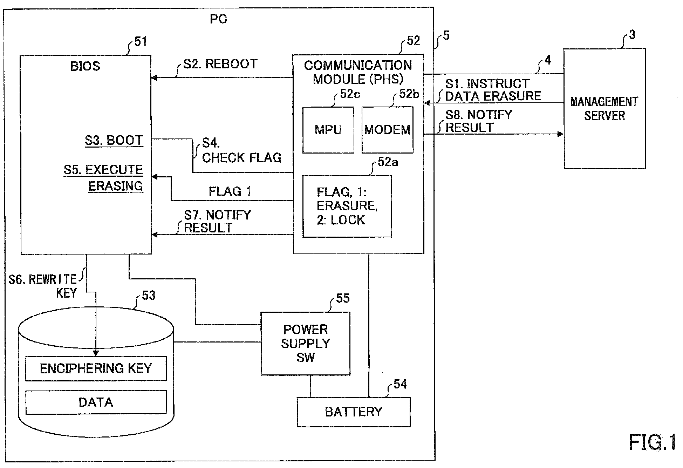

In the PC system, a method has been proposed to positively transmit to the outside "a notification indicating the data erasure". A description will be given of this method by referring to FIG. 1. FIG. 1 illustrates a PC 5 as an example of a data erasing apparatus. The PC 5 is connected to a management server 3 via a cable or wireless network 4. The PC 5 may completely erase the data within a storage 53 that is formed by an HDD, and positively notify a result of the erasure to the management server 3, by combining and operating a dedicated BIOS (Basic Input/Output System) 51 embedded with firmware for executing a data erasing process and a dedicated communication module (PHS) 52 that can transmit "a notification indicating the data erasure" by a minimum setting.

A description will be given of a data erasing operation performed by the PC 5. First, in step S1, the management server 3 transmits a command (erase command) instructing the data erasure to the communication module 52 via the network 4. Next, in step S2, the communication module 52 reboots the BIOS 51 upon receipt of the erase command.

Next, in step S3, when the BIOS 51 is booted, the BIOS 51, in step S4, checks a state of a flag 52a stored in the communication module 52. For example, the flag 52a that is "1" indicates the data erasure, and the flag 52a that is "2" indicates a PC lock. When the BIOS 51 judges that the flag 52a is "1", the BIOS 51, in step S5, executes a data erasing process. An example of the data erasing method includes a method in which the BIOS 51, as indicated by step S6, for example, rewrites an enciphering key used at the time of enciphering the data within the storage 53. Next, in step S7, the BIOS 51 notifies the result of the data erasure to the communication module 52. Next, in step S8, the communication module 52 transmits the notification indicating the data erasure to the management server 3.

The communication module 52 is directly connected to a battery 54 within the PC 5. Accordingly, the communication module 52 is supplied with power directly from the battery 54, and can communicate with the management server 3 even in a case in which the power of the PC 5 is off. In addition, the communication module 52 includes an MPU (Micro Processing Unit) 52c and a modem 52b, and can notify the result of the data erasure using the modem 52b under a control of the MPU 52c.

Hence, when executing the data erasing process in the PC 5 illustrated in FIG. 1, the BIOS 51 is booted, and the data erasure is made by rewriting the enciphering key used to encipher the data within the storage 53. After executing the data erasure, the BIOS 51 sets the execution result to the dedicated communication module 52. As described above, the settings related to the data communication are stored in the communication module 52, and the communication module 52 can make the transmission and reception. For this reason, by simply setting the execution result of the data erasure to the communication module 52 by the BIOS 51, "a notification indicating the data erasure" is transmitted from the communication module 52 to the management server 3. Therefore, by using the PC 5, it is possible to notify a reliable execution result of the data erasure after erasing all of the data within the storage 53.

However, the BIOS 51 and the communication module 52 are dedicated hardware (dedicated components) for executing the data erasing process and a result notifying process. For this reason, extending or modifying functions of the BIOS 51 and the communication module 52 provided by the dedicated hardware is not as easy compared to a case in which the functions are provided by software. In addition, providing the dedicated hardware in the PC 5 increases the cost of the PC 5.

Next, a description will be given of one embodiment of the data erasing apparatus and the data erasing method which can positively transmit the notification on the execution result of the data erasure to the management server without having to provide the dedicated hardware for performing the data erasure and the notification on whether the data is erased.

### [Configuration of Data Erasing Apparatus]

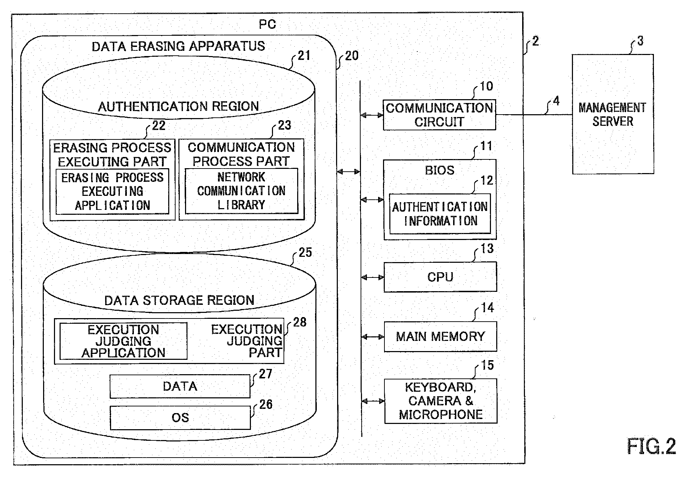

A description will be given of a configuration of the data erasing apparatus in one embodiment, by referring to FIG. 2. FIG. 2 is a diagram illustrating the configuration of the data erasing apparatus in one embodiment. In this embodiment, a data erasing apparatus 20 is connected to a PC 2. However, an apparatus to which the data erasing apparatus 20 is connected is not limited to the PC 2, and may be any information processing apparatus. The PC 2 includes a communication circuit 10, a BIOS 11, a CPU 13, a main memory 14, and a keyboard, camera and microphone 15. In the following description, a system in which the data erasing apparatus 20 is connected to the PC 2 may also be referred to as a PC system.

The communication circuit 10 is an interface for transmitting data to and receiving data from the management server 3 via the network 4. The BIOS 11 is formed by a nonvolatile storage medium such as a flash memory or the like, and stores authentication information 12. The BIOS 11 executes a POST (Power On Self Test) at the time of booting the PC 2.

The CPU 13 is a processor that reads an erasing process executing application or a network communication library from a storage part formed by an authentication region 21 and a data storage region 25, and executes a data erasing process to erase the data stored in the data storage region 25 and a process to notify the execution result of the data erasing process. The main memory 14 is an example of a storage device, and may temporarily store the data or the like. The keyboard, camera and microphone 15 are an example of an acquiring part that acquires input information, image information, and audio information.

The storage region (storage part) is completely separated from the authentication region 21 and the data storage region 25. In other words, the data storage region 25 is separated from the authentication region 21, and stores, amongst the data within the storage, the data to be erased in a case in which a predetermined erasing condition is satisfied, such as when a theft or the like is assumed. The authentication region 21 is first booted when the power of the PC 2 is turned on. The authentication result 21 and the data storage region 25 may be formed by an HDD, for example.

The data storage region 25 stores an OS 26. The OS 26 is prohibited from reading from and writing to the authentication region 21. An authentication process is performed in the authentication region 21, and a user access to the data storage region 25 is permitted after the authentication process succeeds. The user is permitted to write data to the data storage region 25, but is prohibited from writing data to the authentication region 21.

The authentication result 21 is an example of a first storage region for storing data that needs to be protected. The data storage region 25 is an example of a second storage region for storing data that does not need to be protected. The data storage region 25 stores the data to be erased when the predetermined erasing condition is satisfied.

In this embodiment, the erasing process executing application and the network communication library are stored in the authentication region 21. The erasing process executing application is a program that executes functions of the erasing process executing part 22, and in a case in which the authentication information 12 has been modified, executes a data erasing process to erase the data stored in the data storage region 25. The network communication library is a program that executes functions of the communication process part 23, and transmits to the outside a notification indicting the data erasure after the data erasing process is executed. The erasing process executing application and the network communication library are programs which do not operate on the OS. Hence, according to the data erasing apparatus 20 in this embodiment, a temporary file will not be automatically created by an application operating on the OS when the data erasing process is executed.

In this embodiment, the OS 26, data 27, and an execution judging application are stored in the data storage region 25. The execution judging application is a program that executes functions of an execution judging part 28, and judges whether the predetermined erasing condition is satisfied. In a case in which the execution judging application judges that the predetermined erasing condition is satisfied, the execution judging application modifies the authentication information 12. The execution judging part 28 in this embodiment is an example of a modifying part that modifies the authentication information 12 when the predetermined erasing condition is satisfied. The execution judging application is a program that operates on the OS 26.

Processes of the erasing process executing part 22, the communication process part 23, and the execution judging part 28 may be performed by the CPU 13 by executing the programs described above that are stored in the authentication region 21 or the data storage region 25.

### [Operation of Data Erasing Apparatus]

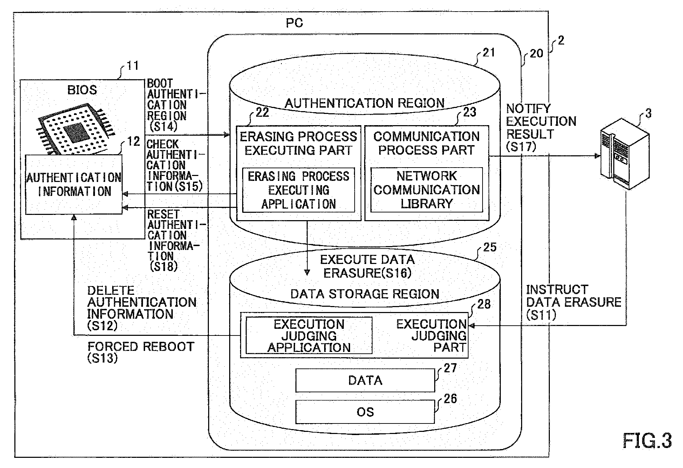

Next, a description will be given of an operation of the data erasing apparatus in this embodiment, by referring to FIG. 3. FIG. 3 is a diagram for explaining the operation of the data erasing apparatus 20 in this embodiment. When the PC 2 is booted, the execution judging part 28 judges whether the predetermined erasing condition, such as a remote command instructing data erasure, detection of an unauthorized operation by other than an authorized user, or the like is satisfied. Here, a description will be given of a case in which the data erasing instruction is received from the management server 3.

When the PC 2 is booted, the execution judging part 28 operates the execution judging application. Actually, when the PC 2 is booted, the the execution judging application stored in the data storage region 25 acquires (polls) a command requested from the management server 3 (step S11).

Next, the execution judging part 28 deletes the authentication information 12 stored in the BIOS 11 according to the acquired data erasing instruction (step S12), and forcibly reboots the PC system (step S13). The authentication information 12 may be rewritten instead of deleting the authentication information 12. In a particular example in which the authentication information 12 is deleted, the execution judging part 28 may set the authentication information 12 that is "ABC" to "000" or NULL, for example. In addition, in a particular example in which the authentication information 12 is rewritten, the execution judging part 28 may set the authentication information 12 that is "ABC" to "XYZ", for example.

The authentication information 12 may be an ID that specifies the PC system, a flag indicating whether or not to execute the data erasure, or simply a random number. In addition, a storage location of the authentication information 12 may be any location accessible from both the execution judging application on the OS 26 of the data storage region 25 and the erasing process executing application of the authentication region 21. For example, the storage location of the authentication information 12 may be a flash region of the BIOS 11, a register of a chipset, or the like.

The BIOS 11 boots the authentication region 21 (erasing process executing part 22) (step S14). The erasing process executing part 22 checks the authentication information 12 (step S15). In a case in which the authentication information 12 is deleted or rewritten (hereinafter referred to as a case in which the authentication information 12 has been modified), the erasing process executing part 22 executes a data erasure (step S16). The data erasing method rewrites the enciphering key used at the time of enciphering the data 27 of the data region 25. The data erasing method is not limited to a particular method, and may erase or rewrite the data itself stored in the data region 25, perform a write a plurality of times, or the like.

In a case in which the data erasing process is set when executing the POST at the time of rebooting the PC system (step S13), the authentication information 12 has been modified. For this reason, the erasing process executing part 22 causes the erasing process executing application to be executed to erase all of the data in the data storage region 25. After the data erasure, the communication process part 23 transmits to the management server 3 a notification indicating that the data is erased, using the network communication library (step S17). Hence, it is possible to notify the management server 3 that all of the data in the data storage region 25 are positively erased. Next, the value of the authentication information 12 stored in the BIOS 11 is returned to an original value (step S18: reset). Accordingly, the authentication information is returned to the original value, so that the data erasure does not occur when booting the PC 2 the next time. Consequently, after the data erasure, the authentication information 12 is reset, so that the next and subsequent booting of the PC 2 is performed as a normal booting. However, because all of the data or the like to be originally booted are deleted, only an OS recovery process can be performed.

When the authentication information 12 is deleted (for example, set from "ABC" → "000"), a reset process of step S18 is required. On the other hand, when the authentication information 12 is rewritten (for example, set from "ABC" → "XYZ"), the reset process of step S18 is unnecessary because the erasing process is not executed every time the PC system is rebooted, and the authentication information 12 that is rewritten to "XYZ" can be used as it is for the enciphering of the data.

### (Operation Sequence of Parts)

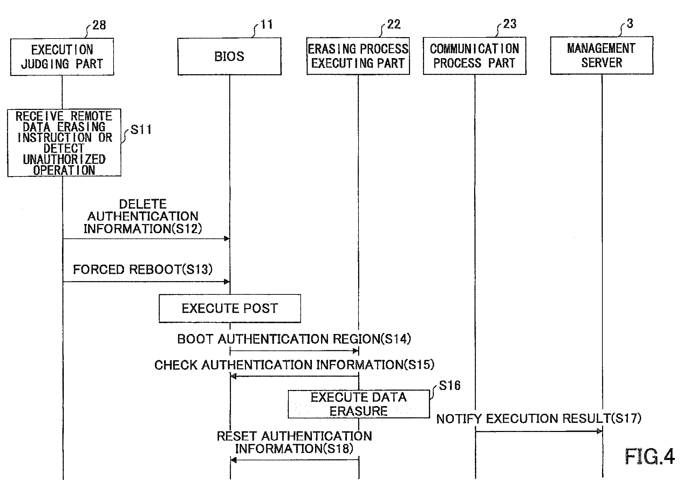

A description will be given of an operation sequence of parts, by referring to FIG. 4. FIG. 4 is a diagram illustrating the operation sequence of the parts of the data erasing apparatus in one embodiment. When the execution judging part 28 receives the remote data erasing instruction or detects the unauthorized operation (step S11), the authentication information 12 stored in the BIOS 11 is deleted (step S12), and the forced reboot is performed (step S13).

The BIOS 11 boots the authentication region 21 at the time of executing the POST (step S14), and the erasing process executing part 22 checks the authentication information 12 (step S15). In a case in which the authentication information 12 has been modified, the erasing process executing part 22 erases all of the data in the data storage region 25 (step S16). After all of the data in the data storage region 25 are completely erased, the communication process part 23 transmits a notification indicating the data erasure to the management server 3 (step S17). In addition, the erasing process executing part 22 resets the authentication information 12 (step S18).

As described above, according to the data erasing apparatus 20 in this embodiment, the functions to delete the data within the storage that do not need to be protected and to notify the execution result after the data erasure can be performed solely by a general-purpose hardware of the PC and a new application. Hence, according to the data erasing apparatus 20 in this embodiment, it is possible to transmit the notification on whether the data is erased after the data erasure without using the dedicated hardware.

In addition, because the data erasure is performed in a case in which the authentication information 12 has been modified, the data erasure is similarly performed in a case in which a connection is made to another PC system, and the execution result of the data erasure can be notified to the outside. Such processes may be performed by reading and executing the erasing process executing application and the network communication library stored in the authentication region 21. These processes may be executed without operating the OS 26 stored in the data storage region 25. Hence, it is possible to positively erase all of the data that do not need to be protected within the data storage region 25, and to notify the execution result of the data erasure to the management server 3 after all of the data are erased.

In a case in which no modification is made to the authentication information 12, the data storage region 25 becomes accessible.

### [Exemplary Implementation 1]

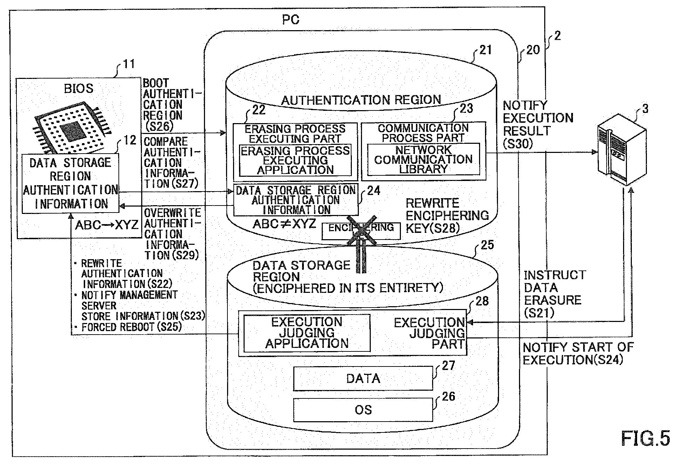

Next, a description will be given of examples of operations of the data erasing apparatus 20 in the embodiment described above, for an exemplary implementation 1 and an exemplary implementation 2 in this order. First, a description will be given of the operation of the data erasing apparatus 20 according to the exemplary implementation 1, by referring to FIG. 5. Next, a description will be given of an operation sequence of parts of the data erasing apparatus in the exemplary implementation 1, by referring to FIG. 5.

As described above, in the data erasing apparatus 20 according to the exemplary implementation 1, the authentication region 21 that is first booted when the storage power is turned on, is provided separately from the data storage region 25 into which the normal OS 26 is installed. The OS 26 is prohibited from reading from and writing to the authentication region 21. In addition, after the authentication is performed in the authentication region 21, the access to the data storage region 25 is permitted. Moreover, the entire data stored in the data storage region 25 is enciphered, and the enciphering key is stored in the authentication region 21. When executing the data erasure, the enciphering key is deleted or rewritten, in order to perform the data erasing process with respect to the entire data storage region 25. The authentication region 21 is provided with the erasing process executing part 22 (erasing process executing application), the communication process part 23 (network communication library), and authentication information 24 that is stored in the data storage region to be compared with the authentication information 12. The authentication information 12 and 24 are information such as a character string, binary information, or the like.

The execution judging part 28 (execution judging application) of the data storage region 25 operates on the OS 26, and constantly communicates with the management server 3 while the OS 26 is booted, in order to transmit and receive various kinds of commands. In addition to receiving the command transmitted from the management server 3, the execution judging part 28 itself may judge a connection state of the network 4 at the time of booting the PC system or the like, and acquire information from the management server 3.

The data storage region of the authentication information 12 is provided within the flash memory managed by the BIOS 11. The execution judging part 28 and the erasing process executing part 22 can read from and write to the data storage region.

The execution judging part 28 judges whether or not to execute the data erasing process, mainly based on the next predetermined erasing condition. However, the erasing condition under which the data erasing process is executed, other than a case in which a clear erasing instruction is received, such as a case in which an unauthorized operation is suspected, is not limited the following.
(1) In the case of step S21 in FIG. 5, that is, in the case in which the management server 3 sets the command instructing the data erasure when the command information is acquired from the management server 3 at the time of booting the PC system, it may be judged that the data erasing process is to be executed.
(2) In the case in which a log-in authentication fails an arbitrary number of times or more when performing the log-in authentication (password, biometric information, IC card, or the like) at the time of booting the PC system, at the time of a standby restoration, and at the time of restoration from a screen lock, it may be judged that the data erasing process is to be executed.
(3) In the case in which the data erase command is received from the management server 3 while the PC system is in use in a state in which a predefined time has elapsed from a previous log-in or log-out, it may be judged that the data erasing process is to be executed.

A method of executing the data erasure may include a method in which the execution judging part 28 rewrites the authentication information 12 in the data storage region of the BIOS 11 by arbitrary information randomly generated by a random generator or the like (step S22). As an example, when an initial value of the authentication information 12 is "ABC", the authentication information 12 is rewritten to "XYZ" in this case. In addition, the execution judging part 28 may store detailed information to be notified to the management server 3 if necessary as described later, in accordance with the data storage region of the BIOS 11 (step S23). An example of the detailed information includes the condition (reason) to execute the data erasure. Furthermore, the execution judging part 28, at this timing, may notify a start of executing the data erasure to the management server 3 (step S24).

In a wireless case, the data transmitted from a transmitting source apparatus may not reach a transmitting destination apparatus when a wireless communication state is poor. For example, when the data erase command transmitted from the management server 3 is received by the PC 2, the PC 2 returns an ACK to the management server 3. By receiving the ACK, the management server 3 recognizes that the data erase command is received by the PC 2. In addition, when the start of executing the data erasure is notified to the management server 3, the management server 3 receives both the ACK and the notification indicating the start of executing the data erasure. Hence, the management server 3 can recognize whether the data erase command has not reached the PC 2 or the data erase command reached the PC 2 but the execution of the data erasure has not started. For this reason, the management server 3 can more easily manage the data erasing process even in the case in which the wireless communication state is poor.

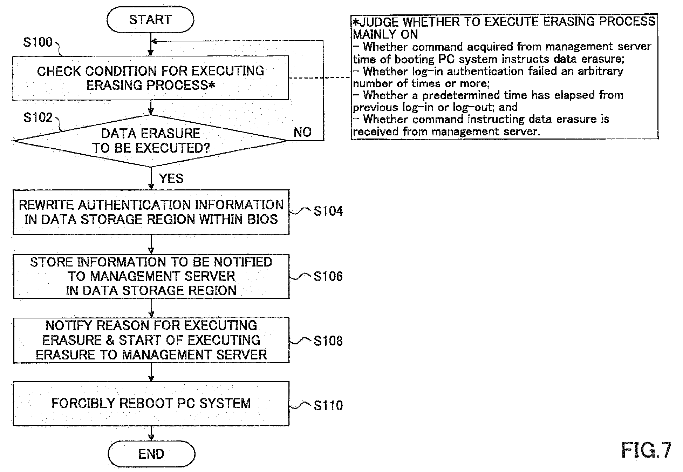

Next, the execution judging part 28 forcibly reboots the PC system (step S25). In this state, the PC system may be rebooted with a priority, and a normal stop process of other applications that are operating may be ignored. A flow chart (FIG. 7) of an operation of the execution judging part 28 when executing the execution judging application will be described later.

At the time of rebooting the PC system, the authentication region is booted (step S26), and the erasing process executing part 22 in the authentication region 21 operates the erasing process executing application to compare the authentication information (step S27). More particularly, the erasing process executing part 22 compares the authentication information 12 in the data storage region of the BIOS 11 with the authentication information 24 within the authentication region 21. As illustrated in step S22, in a case in which it is judged that the predetermined erasing condition is satisfied, the authentication information 12 has been modified. For example, the authentication information 12 has been modified as "ABC" → "XYZ". In this state, the authentication information 24 stored in the data storage region within the authentication region 21 is "ABC", and thus, the authentication information 12 and the authentication information 24 do not match. In this case, the erasing process executing part 22 rewrites the enciphering key stored in the data storage region 25 (step S28). As a result, it is possible to instantaneously erase all of the data in the data storage region 25.

After executing the data erasure, the authentication information 24 within the storage in the data storage region of the BIOS 11 is overwritten by contents of the authentication information 12 (step S29). In other words, the authentication information 24 of the authentication region 21 is rewritten from "ABC" to "XYZ". Hence, at the time of the next and subsequent booting of the PC, the authentication information 12 of the BIOS 11 and the authentication information 24 of the authentication region 21 match, and no data erasure is executed. If the authentication information were not overwritten, the erasing process would be executed every time the PC system is rebooted, and thus, the authentication information is overwritten in order to prevent the erasing process from being executed every time the PC system is rebooted.

Next, the communication process part 23 uses the communication library within the authentication region 21 to notify the data erasure, and to transmit the detailed information in the data storage region of the BIOS 11, as the notification of the execution result, to the management server 3 (step S30). The detailed information transmitted from the PC system to the management server 3 may include an ID or serial No. specifying the PC system as the notification of the execution result, the ID or serial No. specifying the erased storage, a time when a normal log-in or log-out is made, a time when the data erasure is executed, or the like.

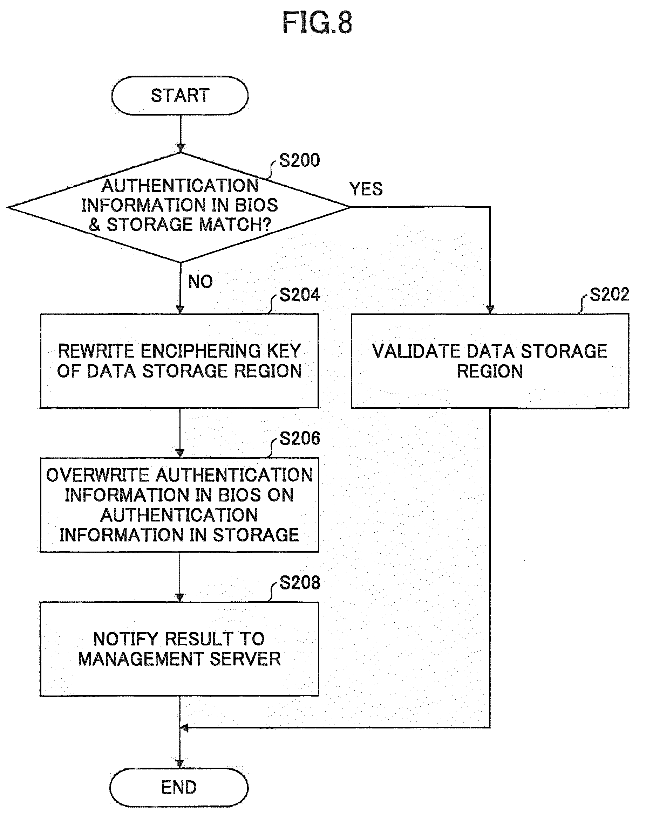

The management server 3 may use other detailed information, such as arbitrary information for detailed clarification of the lost state and search, by storing the arbitrary information in the data storage region by the execution judging part 28 and notifying the arbitrary information to the management server 3 by the communication process part 23. Examples of the arbitrary information may include an IP address acquired immediately prior to the erasure, WLAN access point information, information acquired by a built-in camera or a built-in microphone, a key operation log, GPS information or position information of a communication base station, operation information of individual software, or the like. However, a type of arbitrary information acquired by the management server 3 is not limited to a particular type. A flow chart of an operation of the erasing process executing part 22 when executing the erasing process executing application, and a flow chart (FIG. 8) of an operation of the communication process part 23 will be described later.

### (Operation Sequence of Parts)

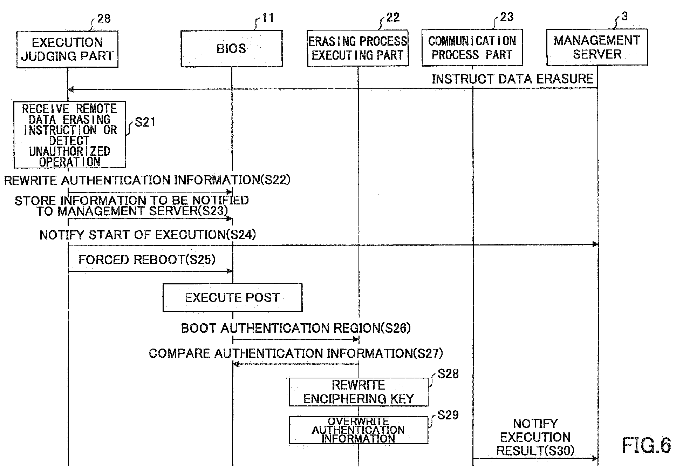

FIG. 6 is a diagram illustrating an operation sequence of parts of the data erasing apparatus in the exemplary implementation 1. When the execution judging part 28 receives the command instructing the data erasure or detects the unauthorized operation (step S21), the execution judging part 28 rewrites the authentication information 12 stored in the BIOS 11 by the randomly generated arbitrary information (step S22). The execution judging part 28, at this timing, may store the detailed information to be notified to the management server 23 in the data storage region of the BIOS 11 (step S23). In addition, the execution judging part 28 may notify the start of executing the data erasure to the management server 3 (step S24). The execution judging part 28 forcibly reboots the PC system (step S25).

When the BIOS 11, after the reboot, executes the POST and boots the authentication region 21 (step S26), the erasing process executing part 22 compares the authentication information 12 and the authentication information 24 (step S27). In a case in which the data erasing process is set, the authentication information 12 has been rewritten. For this reason, the erasing process executing part 22 judges that the authentication information 12 and the authentication information 24 do not match, and executes the data erasure by rewriting the enciphering key at the time of enciphering the data in the data storage region 25 (step S28). In addition, the erasing process executing part 22 overwrites the authentication information 24 by the contents of the authentication information 12 (step S29). After the data erasing process is completed, the communication process part 23 transmits the notification indicating the data erasure to the management server 3 (step S30).

### (Operation of Execution Judging Part)

Next, a description will be given of an operation when the execution judging part 28 executes the execution judging application, by referring to FIG. 7. FIG. 7 is a flow chart illustrating the operation of the execution judging part of the data erasing apparatus in the exemplary implementation 1.

For example, when the PC 2 is booted, the execution judging part 28 checks the predetermined erasing condition for executing the erasing process (step S100), and judges whether to execute the data erasing process based on a result of the checking (step S102).

Whether to execute the erasing process is judged mainly on whether the following predetermined erasing condition for executing the erasing process is satisfied.
- Whether the command acquired from the management server 3 at the time of booting the PC system instructs the data erasure;
- Whether the log-in authentication failed an arbitrary number of times or more;
- Whether a predetermined time has elapsed from the previous log-in or log-out; and
- Whether the command instructing the data erasure is received from the management server 3.

In a case in which it is judged in step S102 that the above condition is not satisfied, the process returns to step S100. In a case in which it is judged in step S102 that the above condition is satisfied, the execution judging part 28 rewrites the authentication information 12 in the data storage region of the BIOS 11 by the arbitrary information such as the random number or the like (step S104). The execution judging part 28 stores the information to be notified to the management server 3 in the data storage region of the authentication region 21 (step S106). Next, the execution judging part 28 notifies the reason for executing the erasure and the start of executing the erasure to the management server (step S108). An example of the reason for executing the erasure includes the result of checking the predetermined erasing condition described above. Next, the execution judging part 28 forcibly reboots the PC system (step S110), and this process ends.

### (Operations of Erasing Process Executing Part/Communication Process Part)

Next, a description will be given of an operation of the erasing process executing part 22 when executing the erasing process executing application and an operation of the communication process part 23, by referring to FIG. 8. FIG. 8 is a flow chart illustrating the operations of the erasing process executing part and the communication process part of the data erasing apparatus in the exemplary implementation 1.

When the PC system is forcibly rebooted in step S110 of FIG. 7, the erasing process executing part 22 judges whether the authentication information 12 stored in the BIOS 11 and the authentication information 24 within the authentication region 21 match (step S200). In a case in which it is judged that the authentication information 12 and the authentication information 24 match, the erasing process executing part 22 validates the data storage region 25 to make the data storage region 25 accessible (step S202), and this process ends.

On the other hand, in a case in which it is judged in step S200 that the authentication information 12 and the authentication information 24 do not match, the erasing process executing part 22 rewrites the enciphering key at the time of enciphering the data within the data storage region 25, in order to erase all of the data in the data storage region 25 (step S204). Next, the erasing process executing part 22 overwrites the authentication information 12 of the BIOS 11 on the authentication information 24 of the authentication region 21 (step S206). Next, the communication process part 23 transmits to the management server 3 a notification indicating the data erasure (step S208), and this process ends.

As described above, according to the data erasing apparatus 20 in the exemplary implementation 1, the functions to delete the data within the storage that do not need to be protected and to notify the execution result after the data erasure can be performed solely by the general-purpose hardware of the PC and the new application. Hence, it is possible to more easily extend the functions without having to use dedicated hardware, and it is possible to prevent the cost from increasing.

According to the data erasing apparatus 20 in the exemplary implementation 1, the data erasure is executed while the PC system is being booted or at a timing when the unauthorized user boots or operates the PC system. However, in a case in which power is constantly supplied to the communication process part 23 and the PC system can be booted by the command from the management server 3, it is possible to execute the data erasure at an arbitrary timing regardless of the operation by the unauthorized user.

### [Exemplary Implementation 2]

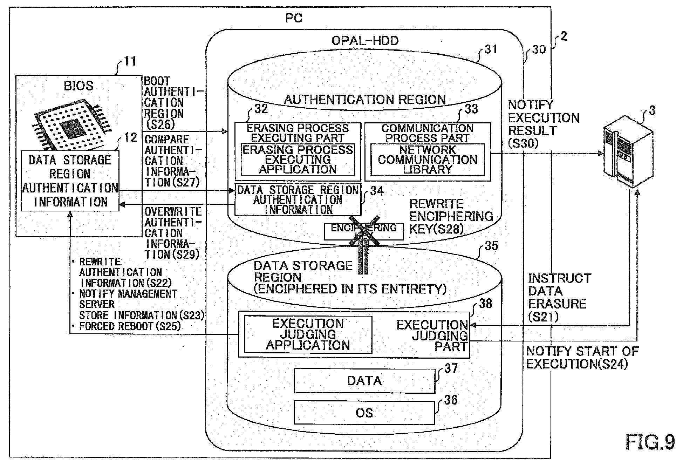

Next, a description will be given of the configuration and operation of the data erasing apparatus in an exemplary implementation 2, by referring to FIG. 9. FIG. 9 is a diagram for explaining the operation of the data erasing apparatus in the exemplary implementation 2.

A data erasing apparatus 30 in the exemplary implementation 2 uses for a storage part, that is, a storage part (storage) including the authentication region and the data storage region, a storage device 30 that is in conformance with Opal SSC (Opal Security Subsystem Class) standards.

The storage part of the data erasing apparatus 30 in this embodiment is a storage device in conformance with TCG Opal SSC (TCG Opal Security Subsystem Class) standards standardized by TCG (Trusted Computing Group). More particularly, the storage part of the data erasing apparatus 30 in this embodiment may be formed by a storage device such as an HDD (Hard Disk Drive), an SSD (Solid State Drive), or the like.

In an HDD that is not in conformance with the TCG Opal SSC standards, the storage region can only have one bootable image. On the other hand, the storage device 30 in conformance with the TCG Opal SSC standards can have two bootable images. One bootable image is a data storage region 35 that stores user data, and the other bootable image is an authentication region (PBA region: PreBoot Authentication region) 31 that is created for the purposes of implementing an authentication function and performing an authentication process before access to the data storage region 35 is permitted. The authentication region 31 is an example of the first storage region for storing data that needs to be protected. The data storage region 35 is an example of the second storage region for storing data that does not need to be protected. The data storage region 35 stores the data to be erased when the predetermined erasing condition is satisfied.

The data storage region 35 stores the OS to be booted by the PC2 at the connecting destination, data created by the user of the PC 2, or the like. The data erasing apparatus 30 erases the data stored within the data storage region 35 when it is judged that the authentication information 12 does not match that stored in the authentication region 31. For example, the data may be erased by overwriting zeros on the data. In addition, because the data erasing apparatus 30 is an HDD in conformance with the TCG Opal SSC standards and includes an enciphering function that uses hardware, the data may be erased not by overwriting but by regenerating the enciphering key. More particularly, a "GenKey" command of the TCG command may be used. In other words, since the entire data stored in the data storage region 35 are enciphered in the storage device 30 in conformance with the Opal SSC (Opal Security Subsystem Class) standards, the enciphering key is stored in the data storage region 35 of the authentication region 31. When erasing the data, an erasing process executing part 32 deletes or rewrites this enciphering key, so as to perform the data erasing process with respect to the entire data storage region 35.

The operation of the data erasing apparatus 30 in the exemplary implementation 2 is the same as the operation (refer to FIG. 5) of the data erasing apparatus 20 in the exemplary implementation 1, and a description thereof will be omitted. Details of the storage device in conformance with the Opal SSC (Opal Security Subsystem Class) standards are disclosed in Japanese Laid-Open Patent Publication No. 2011-210129.

According to the data erasing apparatus 30 in the exemplary implementation 2, it is possible to completely erase the data within the data storage region 35 without using dedicated hardware, and transmit a notification indicating the data erasure to the management server 3 after the data erasure. Hence, it is possible to positively notify the management server 3 that the information leak from the data storage region 35 has been prevented.

### [Modification]

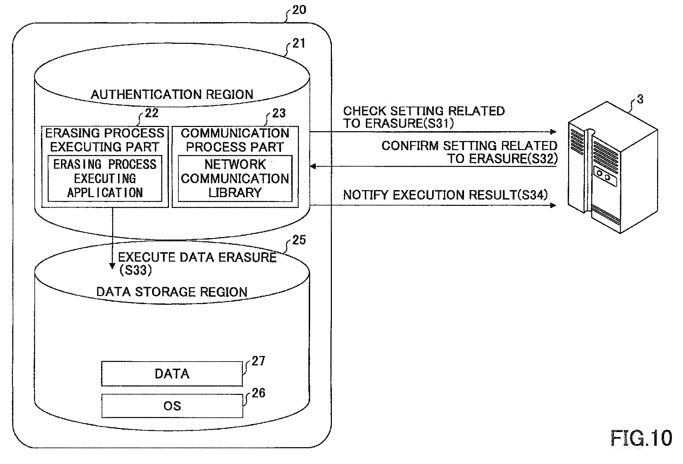

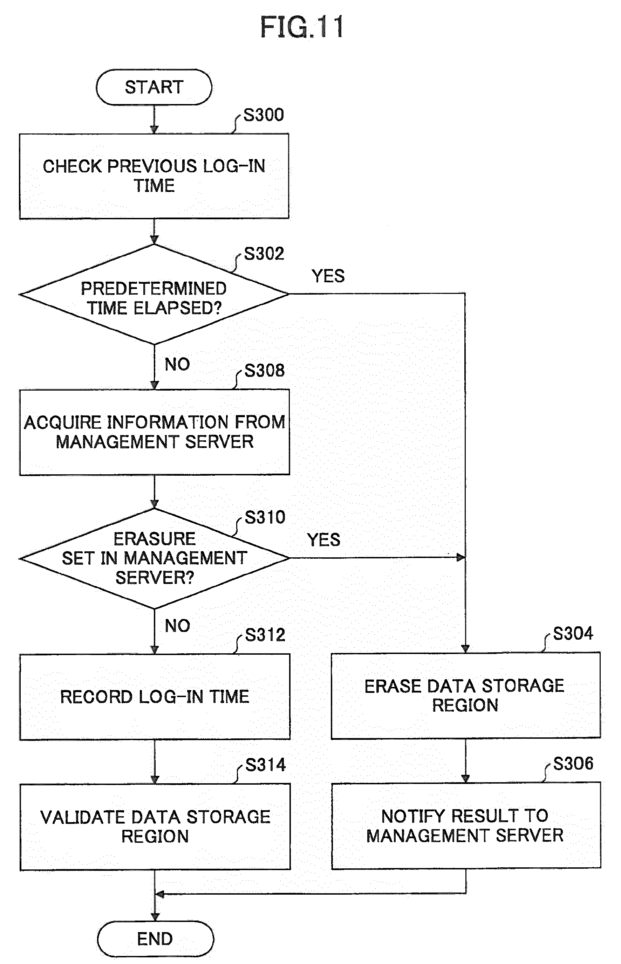

Next, a description will be given of a configuration and an operation of the data erasing apparatus in a modification of one embodiment, by referring to FIGs. 10 and 11. FIG. 10 is a diagram for explaining the configuration of the data erasing apparatus in this modification of one embodiment, and FIG. 11 is a flow chart illustrating the operation of the erasing process executing part and the communication process part of the data erasing apparatus in this modification of one embodiment. In this modification, it is assumed that the data erasing apparatus 20 is connected to a PC.

In the data erasing apparatus 20 in this modification, with respect to the storage region that becomes the target of the data erasure, the authentication region 21 that is booted first when the power of the PC is turned on is provided in a state completely isolated from the data storage region 25 that is installed with the OS 26, similarly as in the case of the data erasing apparatus 20 of the embodiment described above.

The OS 26 is prohibited from reading from and the writing to the authentication region 21, and the access to the data storage region 25 is permitted after the authentication is successful in the authentication region 21, similarly as in the case of the data erasing apparatus 20 of the embodiment described above. The authentication region 21 includes an erasing process executing application and a network communication library. The erasing process executing part 22 operates the erasing process executing application in order to execute the data erasing process. The communication process part 23 transmits a notification indicating the data erasure to the management server 3 using the network communication library.

In this modification, the erasing process executing part 22, in the authentication region 21, judges whether the predetermined erasing condition is satisfied, and performs the data erasing process in a case in which the predetermined erasing condition is satisfied. In other words, the judging process executed by the execution judging part 28 in the embodiment described above is executed by the erasing process executing part 22 in this modification by checking whether the predetermined erasing condition is satisfied. The erasing process executing part 22 in this modification is an example of a modifying part that modifies the authentication information 12 when the predetermined erasing condition is satisfied.

The erasing process executing part 22 judges whether to execute the data erasing process mainly based on the following predetermined erasing condition.
- The information from the management server is acquired at the time of booting the PC system, and the data erasure is set in the management server; and
- A predefined time has elapsed from the previous log-in.
However, the erasing condition is not limited to a clear command instructing the data erasure, and various conditions, including a case in which an unauthorized operation is suspected or the like, may be used to judge whether to execute the erasing process.

Accordingly, this modification can also create a system that executes the data erasing process without implementing a special application in the data storage region 25. In this modification, the authentication region 21 is executed at the time of booting the PC system, and thus, the checking of the state of the management server 3 is limited to the time when the PC system is booted, and the state of the management server 3 cannot be confirmed during booting of the PC system.

As illustrated in FIG. 10, in the PC system in which a remote data erasure is possible, the data may be transmitted and received via a cable or wireless network 4. In addition, the system as a whole includes the management server 3 that stores or manages information indicating settings on whether the PC system is used in a normal manner or the data erasure is instructed.

At the time of booting the PC system, the erasing process executing part 22 in the authentication region of the storage is executed. The erasing process executing part 22 makes a reference to the information stored or managed by the management server 3, using the communication function of the PC system.

The erasing process executing part 22 checks the setting information recorded in the management server 3 (step S31), and when it is judged that the data erasure is set (step S32), the data in the entire region of the data storage region 25 is erased (step S33). Next, the communication process part 23 uses the communication function of the PC system to notify the execution result of the data erasure to the management server 3 (step S34).

Next, a description will be given of the operation of the data erasing apparatus in this modification, by referring to FIG. 11. When the process of FIG. 11 is started, the erasing process executing part 22 checks a previous log-in time when the previous log-in is made (step S300). Next, the erasing process executing part 22 judges whether a predetermined time has elapsed from the previous log-in time (step S302). When it is judged that the predetermined time has elapsed, the erasing process executing part 22 erases all of the data stored in the data storage region 25 (step S304). After the data erasure, the communication process part 23 transmits a notification indicating the data erasure to the management server 3 (step S306).

On the other hand, when it is judged in step S302 that the predetermined time has not elapsed, the erasing process executing part 22 acquires the information from the management server 3 (step S308), and judges whether the data erasure is set in the management server 3 (step S310). When it is judged that the data erasure is set, the erasing process executing part 22 erases all of the data stored in the data storage region 25 (step 304). After the data erasure, the communication process part 23 notifies the execution result of the data erasure to the management server 3 (step S306).

On the other hand, when it is judged in step S310 that the data erasure is not set, the erasing process executing part 22 records the log-in time (step S312), and validates the data storage region 25. Hence, the access to the data storage region 25 is permitted.

According to the data erasing apparatus 20 in this modification described above, the authentication region 21 can independently perform the processes of judging whether to execute the data erasure, performing the data erasing process, and notifying the data erasure. Hence, the data erasing apparatus 20 in this modification also does not require dedicated hardware, and the functions can be extended with ease and the cost can be prevented from increasing. In addition, in the data erasing apparatus in this modification, it is possible to provide a system that executes the data erasing process without having to implement a special application in the data storage region 25.

According to the data erasing apparatus 20 in the embodiment and the modification described above, the hardware used for the erasure is the general-purpose hardware of the PC, and it is unnecessary to provide dedicated hardware. For this reason, it is possible to easily extend the functions, and an inexpensive system capable of performing a remote erasure can be configured.

In addition, by employing the data erasing method of the embodiment and the modification described above, even in a case in which the application on the OS of the PC system is used, the targets of the data erasure do not need to be limited to specific folders and/or files, and the data in the entire region of the data storage region used by the user of the PC system can be positively erased. Moreover, after the data erasure is executed, "a notification indicating the data erasure" is transmitted to the management server 3 by the communication program that does not operate on the OS. For this reason, "a notification indicating the data erasure" is highly reliable. In other words, according to the data erasing apparatus in the embodiment and the modification described above, the notification cannot be made in a case in which a malicious user steels the HDD and only the possibility of an accident can be judged in this case, however, it is possible to verify that the data erasure is positively executed in a case in which the execution result of the data erasure is notified.

Further, although the data erasing apparatus, the data erasing method, and the program disclosed herein are described by way of embodiments, the present invention is not limited to these embodiments, and various variations and modifications may be made without departing from the scope of the present invention.

### DESCRIPTION OF THE REFERENCE NUMERALS

2: PC, 3: Management Server, 4: Network, 10: Communication Circuit, 11: BIOS, 12: Authentication Information, 13: CPU, 20: Data Erasing Apparatus, 21: Authentication Region, 22: Erasing Process Executing Part, 23: Communication Process Part, 24: Authentication Information, 25: Data Storage Region, 26: OS, 27: Data, 28: Execution Judging Part, 30: Data Erasing Apparatus, 31: Authentication Region, 32: Erasing Process Executing Part, 33: Communication Process Part, 35: Data Storage Region, 36: OS, 37: Data, 38: Execution Judging Part

## Claims

1. A data erasing apparatus **characterized in that** there are provided:
a storage part having a first storage region, and a second storage region that stores data to be erased in a case in which a predetermined erasing condition is satisfied;
a modifying part that modifies authentication information when the predetermined erasing condition is satisfied;
an erasing process executing part that executes a data erasing process to erase data stored in the second storage region in a case in which the authentication information has been modified; and
a communication process part that transmits, via a network, a notification indicating a data erasure after the data erasing process is executed,
wherein a program that causes the data erasing apparatus to function as the erasing process executing part and the communication process part is stored in the first storage region and does not operate in an OS stored in the second storage region.

2. The data erasing apparatus as claimed in claim 1, **characterized in that** the storage part is a storage device in conformance with Opal SSC (Opal Security Subsystem Class) standards.

3. A data erasing method to erase data from a second storage region in a case in which a predetermined erasing condition is satisfied, **characterized in that** a computer performs a process including:
modifying authentication information when the predetermined erasing condition is satisfied;
executing a data erasing process to erase data stored in the second storage region in a case in which the authentication information has been modified; and
transmitting, via a network, a notification indicating a data erasure after the data erasing process is executed,
wherein a program that causes the data erasing apparatus to function as the erasing process executing part and the communication process part is stored in a first storage region, different from the second storage region, and does not operate in an OS stored in the second storage region.

4. The data erasing method as claimed in claim 3, **characterized in that** the first storage region and the second storage region are in conformance with Opal SSC (Opal Security Subsystem Class) standards.

5. A program for erasing data from a second storage region in a case in which a predetermined erasing condition is satisfied, **characterized in that** the program causes a computer to performs a process including:
modifying authentication information when the predetermined erasing condition is satisfied;
executing a data erasing process to erase data stored in the second storage region in a case in which the authentication information has been modified; and
transmitting, via a network, a notification indicating a data erasure after the data erasing process is executed,
wherein a program that causes the data erasing apparatus to function as the erasing process executing part and the communication process part is stored in a first storage region, different from the second storage region, and does not operate in an OS stored in the second storage region.

6. The program as claimed in claim 5, **characterized in that** the first storage region and the second storage region are in conformance with Opal SSC (Opal Security Subsystem Class) standards.

7. A computer-readable storage medium that stores the program recited in claim 5.
